# EUROPÄISCHE PATENTSCHRIFT

(11) **EP 1 750 039 B1**
(45) Veröffentlichungstag und Bekanntmachung des Hinweises auf die Patenterteilung: **12.11.2008**
(21) Anmeldenummer: 05107193.4
(22) Anmeldetag: 04.08.2005
(51) Int. Cl.: F16H 61/12, F16H 59/10

(54) **Anordnung und Verfahren zur Erfassung der Schalthebelstellung in einem Kraftfahrzeug**
Device and method for detecting the shift lever position in a motor vehicle
Dispositif et méthode de détection de la position du levier de vitesses dans un véhicule à moteur

(43) Veröffentlichungstag der Anmeldung: 07.02.2007
(73) Patentinhaber: Getrag Ford Transmissions GmbH, 50725 Köln (DE)
(72) Erfinder: Leibbrandt, Martin, Dr., 50181 Bedburg (DE); Kather, Lutz, 53909 Zülpich (DE); Ehleringer, Richard, 54589 Stadtkyll (DE)

(56) Entgegenhaltungen:
- DE-A1- 4 135 362
- DE-A1- 10 227 633
- DE-A1- 19 653 193
- FR-A- 2 750 763
- US-A- 4 896 135
- US-A- 5 307 013
- US-A- 6 072 390
- US-A- 6 139 468
- US-B1- 6 469 642

## Beschreibung

Die vorliegende Erfindung betrifft eine Anordnung zur Bestimmung der Schalthebelstellung in einem Fahrzeug, insbesondere einem Kraftfahrzeug, gemäß dem Oberbegriff des Patentanspruches 1.

Eine solche Anordnung ist aus der US-A-6 072 390 bekannt.

Eine besonders sichere Bestimmung einer Schalthebelstellung ist insbesondere bei Getrieben mit einem Schalthebel, welcher über keinerlei mechanische Verbindung zu dem Getriebe verfügt - sog. "Shift by Wire"-System -, erforderlich. Bei einem "Shift by Wire"-System wird der Fahrerwunsch auf rein elektronischem Wege von einem Getriebesteuergerät erfasst.

Der Fahrerwunsch bestimmt das Funktionsverhalten des Getriebes. Bei automatischen Getrieben stehen üblicherweise folgende Auswahlmöglichkeiten zur Verfügung: Parken, Rückwärtsfahrt, Neutral und Vorwärtsfahrt. Die Vorwärtsfahrt ist dabei optional noch in zwei Stufen aufgeteilt. Die dem Fahrerwunsch entsprechenden Aktionen werden vom Getriebesteuergerät mittels elektrischer Aktuatoren im Getriebe veranlasst. Dies stellt große Anforderungen an die Zuverlässigkeit der elektronischen Fahrerwunscherfassung, so dass bei einem "Shift by Wire"-System dem elektronischen Sensor zur Fahrerwunscherkennung höhere Aufmerksamkeit zukommt als bei einem herkömmlichen Wandlerautomaten, bei dem eine elektrische Erfassung der Schalthebelstellung in der Regel lediglich zusätzlich zu einer mechanischen Verbindung zum Wandlerautomaten erfolgt, so dass die sensorische Erfassung eine redundante Information liefert, die keinen Einfluss auf die Hauptfahrsituation hat und daher nicht als sicherheitskritisch einzustufen ist. Dagegen ist die Abfrage des Fahrerwunsches bei "Drive by Wire"-Systemen sicherheitsrelevant, d.h. Fehler im System müssen erkannt werden. Weiterhin ist zumindest eine Redundanz im Falle von Einfachfehlern (Fehler auf einer Signalleitung) gefordert, um bei einem Einfachfehler Notlaufeigenschaften zu ermöglichen.

Bei bekannten digitalen Sensorsystemen für Schalthebelstellungen werden Sensoren in Form von elektromechanischen Kontakten oder magnetosensitive Sensoren verwendet. Das Gegenstück zu den Sensoren stellt ein Kodierelement mit einer entsprechenden Codierung dar. Die Codierung kann beispielsweise als elektrisch leitfähige Beschichtung auf einem Isolationskörper oder als magnetische Beschichtung mit unterschiedlicher Polarisierung ausgebildet sein. Die Sensoren erfassen das Datenwort der Codierung in der jeweiligen Position. Eine entsprechende Anzahl an Signalleitungen übermittelt die Information an eine Auswerteinheit.

Die digitale Codierung besteht bei bekannten Systemen meist aus einem sog. Graycode oder einem eigenen aktiven Signal für jede Wählhebelposition. Ein Graycode ist eine binäre Codierung, bei der sich von jeder beliebigen Position zu beiden Nachbarpositionen jeweils nur ein Bit im Datenwort ändert. Die Eigenschaft des Systems, dass sich jeweils nur ein Bit ändern darf, lässt eine einfache Fehlererkennung zu. Eine Diagnoseroutine überprüft, wie viele Bits sich innerhalb eines Zeitraumes ändern. Ein Fehler in der Fahrerwunscherkennung liegt dann vor, wenn sich innerhalb eines vorgegebenen Zeitraumes mehr als ein Bit verändert. Damit ist jedoch keine statische Fehlererkennung, d.h. eine Fehlererkennung ohne sichere Kenntnis des vorhergehenden Zustandes, möglich, was insbesondere nach einem Reset der Elektronik von Nachteil ist. Weiterhin ist eine Fehlerkorrektur bei einem derartigen Graycode nicht möglich.

Eine andere bekannte Möglichkeit besteht darin, für jede zulässige Schaltposition einen Sensor mit zugehöriger Geberspur vorzusehen. Diese gibt im Gültigkeitsbereich ein entsprechendes Signal an den zugehörigen Sensor. Damit unterscheidet sich das Signal von der aktiven Position zu allen anderen Signalen. Eine Fehlererkennung ist bedingt möglich, da die Bedingung erfüllt ist, dass mehr Datenwörter mittels der Codierung darstellbar sind als belegt sind. Eine Fehlerkorrektur ist dagegen nur in wenigen Fällen möglich.

Aus der DE 196 53 193 A1 ist eine Anordnung zur Erfassung der Schalthebelstellung bei einem Automatikgetriebe bekannt, bei der aus der Schalthebelstellung über elektrische Kontakte ein binär codiertes Signal erzeugt wird, das eine Redundanz zur Erkennung und teilweisen Korrektur von Einzelfehlern aufweist. Für die redundante Erkennung von fünf Schalthebelpositionen P, R, N, D, L (zuzüglich Zwischenstellungen des Schalthebels) sind fünf Bits A bis E und für die Korrektur ein weiteres Bit S vorgesehen; letztlich sind also sechs Bits und damit sechs Sensoren erforderlich. Da bei der bekannten Anordnung elektromechanische Kontakte verwendet werden, werden nur Kontaktfehler berücksichtigt, bei denen ein Kontakt in unerwarteter Weise offen bleibt, nicht jedoch der Fall, dass ein Kontakt in fehlerhafter Weise geschlossen wird. Da elektrische Kontakte jedoch einem steten Verschleiß durch Abrieb und Oxidation unterliegen, ist eine berührungslose Abtastung der Schalthebelposition insbesondere durch magnetsensitive Elemente derartigen elektromechanischen Kontakten vorzuziehen. Damit geht allerdings der Nachteil einher, dass bei berührungslos arbeitenden Elementen - wie z.B. Hallsensoren - Fehler in aller Regel in beiden Richtungen, d.h. "0" statt "1" und "1" statt "0", auftreten können. Die Erkennung und Korrektur von Fehlern in beide Richtungen ist jedoch im Rahmen der DE 196 53 193 A1 nicht vorgesehen. Ferner werden bei der bekannten Anordnung lediglich Einzelbitfehler berücksichtigt. Werden mehrere Bits verfälscht, so sind Fehlerkennungen nicht ausgeschlossen, was in bestimmten Situationen die Fahrsicherheit stark beeinflussen kann. Insgesamt wird bei der bekannten Anordnung mit insgesamt sechs Sensoren und Signalleitungen eine nicht optimale Redundanz erreicht.

Der vorliegenden Erfindung liegt die Aufgabe zugrunde, eine Anordnung bzw. ein Verfahren zur Bestimmung der Schalthebelstellung in einem Fahrzeug zu schaffen, die bzw. das mit möglichst wenigen Sensoren und Signalleitungen ein Höchstmaß an Sicherheit gewährleistet.

Die Lösung der vorgenannten Aufgabe erfolgt durch eine Anordnung mit den Merkmalen des Patentanspruches 1.

Vorteilhafte Ausgestaltungen der Erfindung sind in den Unteransprüchen beschrieben.

Die Erfindung wird nachfolgend anhand der Zeichnungen beispielhaft näher erläutert. Es zeigen:
- Figur 1: eine Tabelle, in der eine Codierung der Schaltstellungen für einen Schalthebel mit insgesamt fünf Stellungen dargestellt ist;
- Figur 2: eine Tabelle mit den sich für eine Codierung gemäß Figur 1 ergebenden Hamming-Distanzen (Anzahl der Unterscheidungsmerkmale);
- Figur 3: eine Tabelle mit einer Codierung gemäß Figur 1, bei der zwei Bitmuster zu einer Abtastspur zusammengefasst sind;
- Figur 4: ein schematisches Flussdiagramm für die Hauptroutine eines Erfassungsverfahrens gemäß der vorliegenden Erfindung;
- Figuren 5 und 6: schematische Flussdiagramme für Unterroutinen eines Erfassungsverfahrens gemäß der vorliegenden Erfindung;
- Figur 7: eine schematische Ansicht einer Sensorkonfiguration für einen 7-Positions-Schalthebel mit zwei Sensorspuren;
- Figur 8: eine schematische Ansicht einer Sensorkonfiguration für einen 9-Positions-Schalthebel mit zwei Sensorspuren, und
- Figur 9: eine schematische Ansicht einer Sensorkonfiguration für einen 7-Positions-Schalthebel mit einer Sensorspur.

Zur Verbesserung der Erkennungssicherheit von sensorisch abgetasteten diskreten Schaltpositionen können zum einen dynamische und zum anderen statische Verfahren herangezogen werden. Bei dynamischen Verfahren wird ein erfasster Wert mit vorher erfassten Werten in Beziehung gesetzt. Im Rahmen einer dynamischen Fehlererkennung wird beispielsweise für einen erfassten Sensorwert überprüft, ob dieser einen gültigen Nachbarwert eines vorher erfassten Schaltstellungswertes darstellt. Im Rahmen einer dynamischen Fehlerkorrektur wird ein im Rahmen einer anderen Schaltstellung erkannter Fehler bei der Auswertung weiterer Schaltstellungssignale berücksichtigt. Die dynamischen Verfahren erfordern eine kontinuierliche Überwachung der Schalthebelsignale und können unmittelbar nach einem Start oder Reset der Auswertanordnung nicht angewendet werden. Daher ist eine statische Fehlererkennung und - korrektur durch Verwendung fehlertoleranter Codierungen zweckmäßig, die ggf. mit einer dynamischen Fehlererkennung kombiniert werden kann.

Im Rahmen der vorliegenden Erfindung werden fehlertolerante Codierungen verwendet, die zur Darstellung der Informationen des Sensors herangezogen werden können. Aus der Nachrichtentechnik sind zahlreiche fehlertolerante Codierungen bekannt, die sich dadurch auszeichnen, dass Fehler erkannt und korrigiert werden können. Bei diesen Codierungen wird eine Anzahl A Datenbits mit einer Anzahl R Redundanzbits versehen. Damit wird die Anzahl 2*^{A}* unterschiedlicher Information eine Untermenge von 2^{*A*+*R*} mit der Codierung darstellbarer Informationen. Daraus ergibt sich, dass sich die darstellbareren Informationen untereinander in mehreren Bits unterscheiden können. Dies hat zur Folge, dass ein einzelnes fehlerhaftes Bit, das entgegen der "wahren" Information invertiert ist, nicht auf eine gültige Codierung zeigen kann. Je mehr Bits invertiert werden müssen, um ein anderes gültiges Datenwort darzustellen, umso sicherer ist die Codierung. Diese Mindestanzahl Bits, um die sich jedes Datenwort von jedem anderen gültigen Datenwort unterscheidet, wird als Hamming-Distanz bezeichnet. Übliche Codierungen in der Nachrichtentechnik sind so ausgelegt, dass jede Information zu jeder anderen die gleiche Hamming-Distanz aufweist.

Um einen Fehler erkennen und zusätzlich auch korrigieren zu können, muss die Information bei einem Einzelfehler zur wahren Information die größte Ähnlichkeit vorweisen. Bei einem Fehler unterscheidet sich die Information zur wahren Information in einem Bit. Daraus folgt, dass sich die Information zu allen anderen möglichen Informationen in mindestens zwei Bits unterscheiden muss. Daraus ergibt sich die Mindestanzahl an Unterscheidungen bzw. die erforderliche Hamming-Distanz. Um einen Fehler erkennen und korrigieren zu können, ist eine Hamming-Distanz von n=3 erforderlich. Bei zwei bis vier Datenbits wären somit zusätzlich drei Redundanzbits erforderlich, um alle Fehler erkennen und eindeutig korrigieren zu können. Dies würde für typischerweise fünf zu detektierende Schalthebel-Positionen sechs Sensoren und zugehörige Spuren auf dem Kodierelement erfordern.

Im Rahmen einer Ausführungsform der Erfindung wird dagegen eine Codierung vorgeschlagen, bei der mit nur fünf Sensoren sichergestellt wird, dass keine Verwechslung bei sicherheitskritischen Übergängen, insbesondere R mit D oder L sogar auch bei Doppelfehlern auftreten kann, wohingegen bei funktional ähnlichen, weniger sicherheitskritischen Positionen wie P-N und D-L eine geringere Hamming-Distanz vorgesehen ist.

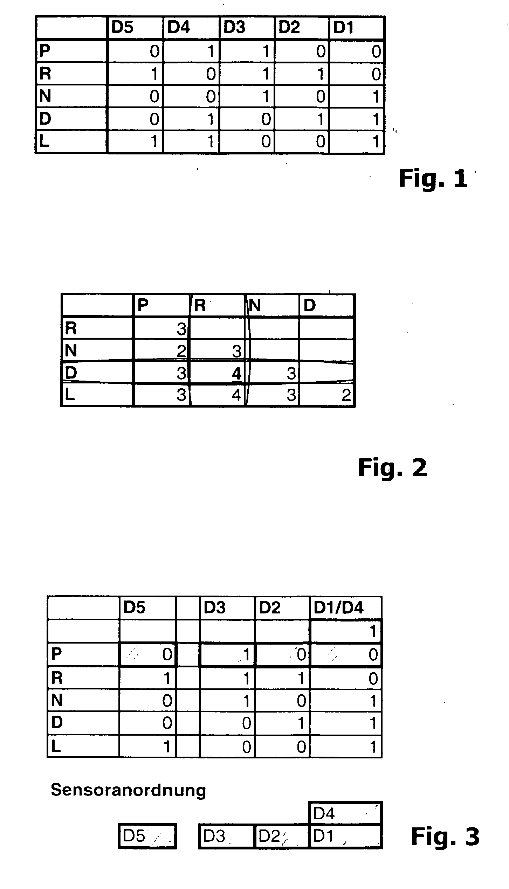

Eine derartige Codierung mit fünf Spuren D5 bis D1 ist in der Tabelle gemäß Figur 1 dargestellt. Die Codierung basiert im Ansatz auf der Hammingcodierung. Für fünf Wählhebelpositionen werden bei der Hammingcodierung für ein Erkennen und Korrigieren von Einzelfehlern drei Datenbits und drei Redundanzbits gefordert. Die Besonderheit der Erfindung liegt darin, dass für die Codierung für fünf Positionen fünf Datenbits ausreichen. Hierbei werden die Randbedingungen des Gesamtsystems, wonach zwischen den Wählhebelpositionen N und P sowie D und L ein Fehler erkannt, aber nicht notwendigerweise korrigiert werden muss, berücksichtigt. In diesem Fall genügt es, dass bei einem als fehlerhaft erkannten N- oder P-Bitmuster dieses der Gruppe P-N zugeordnet werden kann. Gleiches gilt für fehlerhafte Bitmuster bei D oder L, die der Gruppe D-L zugeordnet werden. Die Reaktion im Getriebe erfolgt dann jeweils über vorgegebene Prioritäten.

Damit kann die Hamming-Distanz in der Codierung für P zu N und D zu L von mindestens drei auf zwei verringert werden. Damit wird Platz im Zahlenraum dafür geschaffen, eine fünfte Position unterzubringen. Durch die Zuordnung der Datenwörter zu den Wählhebelpositionen wird sogar eine Hamming-Distanz von vier zwischen den sicherheitskritischen Übergängen zwischen den Fahrstufen für Vorwärtsfahrt und der Fahrstufe für eine Rückwärtsfahrt erreicht. Die Hamming-Distanz ist somit im Rahmen der Erfindung für die sicherheitskritische Gruppe von Übergängen größer als für die weniger sicherheitskritische Gruppe.

Durch die Invertierung einiger Datenbits wird ein ausgewogenes Verhältnis von logisch "0" und logisch "1" in jedem Datenwort erreicht. In jedem Datenwort sind zwei oder drei Bits aktiv. Damit kann die Zuordnung zu "0" und "1" auch vertauscht werden, d.h. die Einträge in der Tabelle gemäß Figur 1 stellen auch eine im Rahmen der Erfindung verwendbare Codierung dar, wenn sie vollständig invertiert werden. Weiterhin kann auch ein Spannungsausfall mit der Folge, dass alle Datenbits "0" sind, und eine Masseunterbrechung mit der Folge, dass alle Bits "1" sind, diagnostiziert werden.

Figur 2 zeigt die Anzahl der Unterscheidungsmerkmale jeder Position zu jeder anderen Position.

Der Eintrag "2" bedeutet, dass Einzelfehler erkannt, aber nicht zweifelsfrei korrigiert werden können, lediglich die Zuordnung zu der jeweiligen Gruppe ist möglich.

Der Eintrag "3" bedeutet, dass Einzelfehler erkannt und korrigiert werden können.

Der Eintrag "4" bedeutet, dass Einzelfehler erkannt und korrigiert werden können und auch Doppelfehler nicht zu Datenwortverwechslungen führen, was bei den Datenwörtern R zu den Datenwörtern der Gruppe D-L der Fall ist.

Die Fahrstufe R in der oberen Spalte weist zu den Fahrstufen Vorwärts, D und L vier Unterscheidungsmerkmale auf. Damit wird bei einem Doppelfehler eine Verwechslung der Wählhebelpositionen R mit D oder L vermieden; ein fahrtrichtungsverkehrtes Anfahren ist sowohl bei einem Einzel- als auch bei einem Doppelfehler ausgeschlossen.

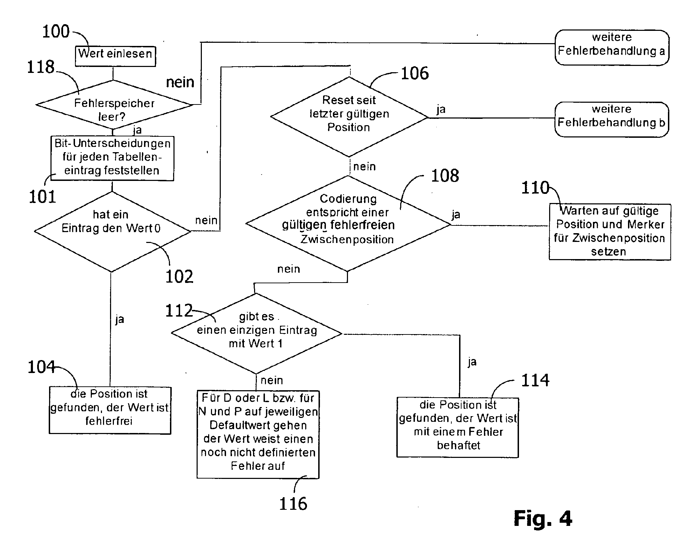

In den Figur 3 ist schematisch verdeutlicht, dass die codierten Bitfolgen für die Bitpositionen D1 und D4 einander jeweils mit einem Versatz von einem Bit entsprechen. Vor diesem Hintergrund kann auf eine von fünf Magnetspuren verzichtet werden, indem die Sensoren D1 und D4 auf derselben Magnetspur um ein Bit versetzt angeordnet werden, wie in Figur 4 unten dargestellt, wodurch der Platzbedarf der Sensoreinrichtung verringert werden kann.

In einer bevorzugten Ausführungsform erzeugt der Schalthebel eine Schwenkbewegung, die auf eine drehbar gelagerte Scheibe mit einem Magnetisierungsmuster entsprechend der Codierung übertragen wird. Die Magnetsensoren, beispielsweise Hallsensoren, sind radial angeordnet und tasten das entsprechende Bitmuster ab. Da die Spuren auf dem inneren Radius gegenüber dem äußeren Radius eine geringere Auflösung aufweisen, ist die Anordnung der Datenspuren in vorteilhafter Ausgestaltung der Erfindung vom geringsten zum höchsten Informationsgehalt jeweils vom inneren zum äußeren Radius gestaffelt. So würde die Spur für das Datenbit D2 mit vier Polaritätswechseln bevorzugt zuäußerst angeordnet, wohingegen die Spur für das Datenbit D3 mit nur einem Polaritätswechsel in zweckmäßiger Weise zuinnerst angeordnet wird.

Für Applikationen, bei denen die Erkennung von Zwischenpositionen gefordert ist, müssen der Codierung weitere Datenwörter hinzugefügt werden. Dies geschieht über ein sequentielles - d.h. nicht gleichzeitiges - Umschalten der Bits, die sich jeweils zwischen den zwei benachbarten Schaltstellungen ändern. Die Datenwörter dieser Sequenz stellen je ein ungültiges Datenwort dar. Eine dynamische Auswertung der Sequenz zeigt die Änderung der Wählhebelposition an. Nach einem Reset wird eine derartige Zwischenposition dagegen als Fehler diagnostiziert.

Die Fehlerkorrektur erfolgt über einen Algorithmus, der vorzugsweise in einem üblichen Mikrokontroller abgearbeitet wird, der auf einem dedizierten Controller oder softwaremäßig im Rahmen einer übergeordneten Steuerungssoftware implementiert sein kann. Ein entsprechender Algorithmus ist in schematischer Form in dem Flussdiagramm von Figur 4 dargestellt, wobei die Abfolge einzelner Schritte auch verändert bzw. einzelne Schritte weggelassen werden können. Der entsprechende Algorithmus wird periodisch im Rahmen einer Hintergrundschleife z.B. alle 10 ms ausgeführt.

Der Algorithmus beginnt in Schritt 100 mit dem Einlesen des Datenwortes von den Sensoren. Die Sensoren sind hierzu über Signalkonditionierungsschaltungen, die aus den in der Regel analogen Signalen digitale Signale erzeugen und entsprechende Eingabeports mit dem Mikrocontroller der Auswerteinheit verbunden. Die Überprüfung und Korrektur des empfangenen Datenwortes beginnt (Schritt 118 wird weiter unten erläutert) in Schritt 101 mit einem Vergleich des empfangenen Datenwortes mit allen Datenwörtern für gültige Schaltstellungen. Diese Datenwörter sind in einer Tabelle abgelegt. Der Vergleich zählt zu jeder Tabellenposition, die einer gültigen Wählhebelposition entspricht, die Unterscheidungsmerkmale zu dem empfangenen Datenwort.

Falls ein Tabelleneintrag zu einer Schaltstellung gefunden wurde, bei dem keine zu dem empfangenen Datenwort abweichenden Bits festgestellt wurden (Abfrage 102), entspricht diese Schaltstellung einer fehlerfrei empfangenen Wählhebelposition, die von der Routine ausgegeben wird (Schritt 104), wonach die Routine beendet ist. Die ermittelte Wählhebelposition wird ferner in einem Zwischenspeicher für spätere dynamische Analysen abgelegt.

Wird dagegen in Schritt 102 kein Tabelleneintrag gefunden, der null Bitabweichungen aufweist, so richtet sich die weitere Vorgehensweise gemäß Abfrage 106 danach, ob seit der letzten Bestimmung einer gültigen Position ein Reset aufgetreten ist oder nicht, d.h., ob eine zuletzt ermittelte gültige Position im Zwischenspeicher vorliegt. Liegt eine zuletzt ermittelte gültige Position im Zwischenspeicher vor (kein Reset), so kann unter Berücksichtigung der gespeicherten Position ermittelt werden, ob es sich bei dem empfangenen Bitmuster um das Bitmuster zu einer Schalthebel-Zwischenstellung handelt. Bei einer derartigen Zwischenstellung sind noch nicht alle Bitwechsel zwischen einzelnen zulässigen Schalthebelstellungen erfolgt, da die Bitwechsel nicht simultan erfolgen. Die Erkennung der Zwischenstellung erfolgt dadurch, dass das eingelesene Bitmuster mit allen, ausgehend von der zuletzt als gültig erkannten Position, möglichen Zwischenstellungen (die jeweils in einer Tabelle abgelegt sind), verglichen wird. Wird eine derartige Zwischenstellung erkannt (Abfrage 108), so erfolgt keine Korrektur, sondern es wird in Schritt 110 ein Merker bzw. ein Flag gesetzt, wodurch die Ausgabe einer als gültig erkannten Schaltstellung durch die Routine solange unterdrückt und die Abfrage solange wiederholt wird, bis eine gültige Schaltstellung erkannt wird. Bei Erkennen einer Zwischenposition wird also keine Korrektur versucht, sondern es wird solange gewartet, bis die Zwischenposition wieder verlassen wurde. Die Erkennung der Zwischenstellung beruht somit auf einer dynamischen Analyse der Sensorsignale.

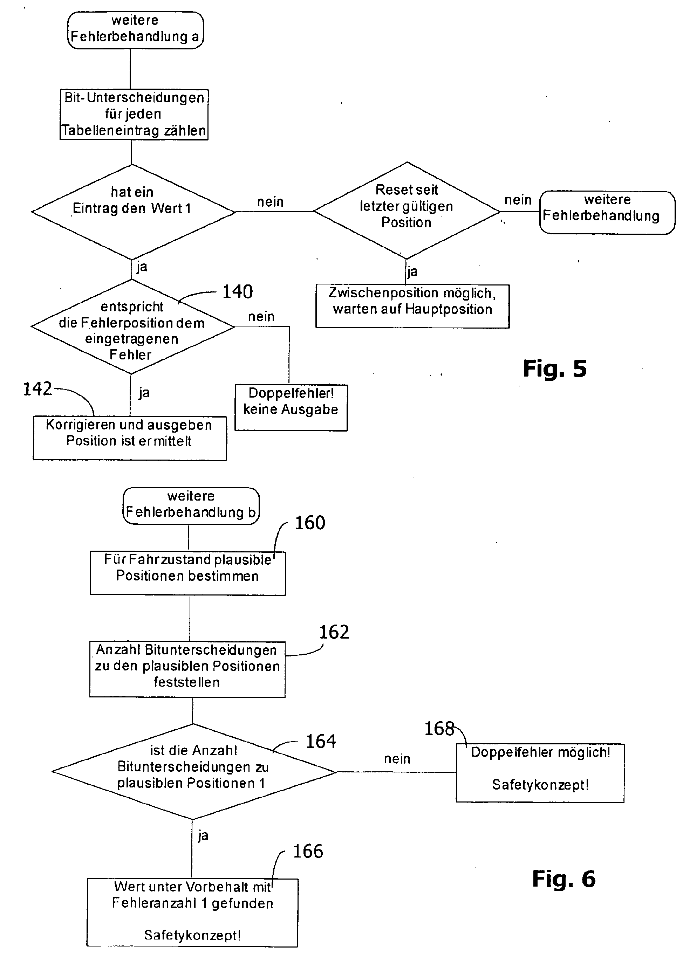

Steht allerdings aufgrund eines vorherigen Resets noch keine zuletzt ermittelte gültige Schaltstellung zur Verfügung, ist eine Abfrage, ob die festgestellte Abweichung auf einer Zwischenstellung des Schalthebels beruht, nicht möglich. In diesem Falle wird gemäß dem in Figur 6 dargestellten Algorithmus "Fehlerbehandlung b" ein spezieller Algorithmus eingesetzt. Bei diesem wird gemäß dem Schritt 160 aus dem aktuellen Fahrtzustand des Fahrzeugs zunächst ermittelt, welche Schaltposition plausibel ist. Wenn sich das Fahrzeug z.B. gemäß den Daten der Radgeschwindigkeitssensoren gerade rückwärts bewegt und das Getriebe eine Rückrollsperre aufweist, ist es z.B. nicht plausibel, dass ein Vorwärtsgang wie D oder L gewählt sein könnte. Mit dieser beschränkten Vorauswahl werden dann in Schritt 162 die jeweilige Anzahl der abweichenden Bits zwischen dem empfangenen Bitmuster und den jeweiligen plausiblen Positionen ermittelt. Wird dabei eine einzige plausible Position mit einer Abweichung von einem Bit gefunden (Abfrage 164), so wird dieser Wert unter Vorbehalt als Wählhebelposition ausgegeben (Schritt 166), wobei im Rahmen eines Sicherheitskonzeptes vom Benutzer des Fahrzeugs über eine Warnanzeige zunächst verlangt werden kann, den Getriebehebel zurück in die P-Stellung zu bewegen und dann zurück in die gewünschte Stellung, so dass dann auch gültige Werte im Zwischenspeicher vorliegen. Ist die Abfrage in Schritt 168 negativ, so bricht die Routine mit einem Fehler ab. In diesem Falle wird der Kraftfluss zum Antriebsstrang unterbrochen und der Fahrzeugführer wird durch eine Warnanzeige aufgefordert, den Schalthebel zunächst in die Stellung P zurückzubewegen.

Wird im Rahmen der Hauptroutine (Figur 4) in Schritt 108 keine Schalthebel-Zwischenposition erkannt, so wird in Schritt 112 abgefragt, ob es lediglich eine einzige gültige Schalthebelstellung gibt, zu deren Codierung eine einfache Bitabweichung besteht. Ist dies der Fall, so kann diese Schalthebelstellung in Schritt 114 ausgegeben werden, da in diesem Falle die Korrektur eindeutig möglich ist.

Ist die Abfrage 112 zu verneinen, so bedeutet dies, dass entweder mehrere Schalthebelstellungen vorliegen, zu deren Codierungen eine Abweichung von jeweils einem Bit besteht, oder dass die minimal gefundene Anzahl abweichender Bits des eingelesenen Bitmusters im Vergleich zu den Codierungen der Grundstellung größer als eins ist. In letzterem Falle liegt ein Doppel- oder noch stärkerer Fehler vor, der nicht mehr korrigiert werden kann, so dass ein entsprechender Fehler angezeigt wird (in Fig. 4 sind diese beiden Fälle in Schritt 116 zusammengefasst) und entsprechende Sicherheitsmaßnahmen wie vorstehend beschrieben eingeleitet werden.

Liegen dagegen mehrere Schalthebelstellungen vor, zu deren Codierungen eine Abweichung von jeweils einem Bit besteht, so ist keine eindeutige Korrektur möglich. Die Codierung ist so gewählt, dass dies bei Einzelfehlern für die Position P und N sowie D und L auftreten kann. In diesem Fall kann P oder N der Gruppe P-N zugeordnet werden, genauso wird D oder L der Gruppe D-L zugeordnet. Eine Prioritätenliste für die Gruppen P-N und D-L gibt die Auswahl vor. Diese Prioritätenliste wird vorzugsweise durch den Fahrzeugzustand derart bestimmt, dass für jeden Fahrzeugzustand immer eine sichere Auswahl getroffen wird.

Wird in Schritt 114 von Figur 4 ein Einzelfehler festgestellt, so kann die Bitposition dieses Fehlers in einem vorzugsweise nicht flüchtigen Fehlerspeicher abgelegt werden, der erst dann wieder gelöscht wird, sobald eine gültige Schalthebel-Stellung ohne Bitfehler identifiziert wurde. Das Ablegen der defekten Bitstelle in einem nichtflüchtigen Speicher ermöglicht es auch nach einem Reset, sofort weitere Einzelfehler zu diagnostizieren. Ist ein derartiger Eintrag im Fehlerspeicher vorhanden (Abfrage 118), so wird in die Fehlerbehandlungsroutine a) gemäß Figur 5 verzweigt. In dieser Routine erfolgt eine Verarbeitung des eingelesenen Bitmusters im Wesentlichen wie in der Hauptroutine, wobei jedoch die bereits als fehlerhaft erkannte Bitstelle zur Beseitigung von Mehrdeutigkeiten zwischen P und N sowie D und L herangezogen werden kann, vgl. die Schritte 140 und 142.

In einer weiteren Ausführungsform der Erfindung ist vorgesehen, dass - neben den als Hauptschaltpositionen bezeichneten Schaltpositionen P, R, N, D und optional L - auch jeweils Zwischenstellungen zwischen diesen Hauptschaltpositionen, die als PR, RN, ND und ggf. DL bezeichnet werden, durch fest vorgegebene Codierungen angezeigt werden. Hierdurch ist es möglich, vom Fahrer unzulässigerweise eingestellte undefinierte Schalthebelzustände auch in einer statischen Betrachtung zu erkennen und entsprechende Maßnahmen zu ergreifen.

Durch die Berücksichtigung der Zwischenpositionen erhöht sich die Anzahl der zu erkennenden Positionen auf (mindestens) 7 bzw. 9. Da das Fahrzeug auch bei Ausfall eines Sensors noch sicher betrieben werden soll, sollen in dieser Ausführungsform weiterhin die Anforderungen bezüglich der Hamming-Distanzen zwischen den Positionen verschärft werden. Zwar genügt eine Hamming-Distanz von zwei, um einen Doppelfehler zu erkennen, und eine Distanz von drei, um einen Einzelfehler sicher zu korrigieren, jedoch führt das sequentielle Auftreten eines weiteren Fehlers in diesem Falle möglicherweise dazu, dass der korrigierte Einzelfehler in eine falsche Position korrigiert wird.

Aus diesem Grund wird die geforderte Hamming-Distanz zwischen weniger sicherheitskritischen Positionen (R-N bzw. D-L) auf zwei und zwischen sicherheitskritischen Positionen (R-N, N-D, R-D) auf vier festgelegt. Es wird weiterhin eine dritte Gruppe eingeführt, die die Erkennung von unzulässigen Zwischenstellungen des Schalthebels abdeckt. Da letztere Aufgabe nur bei vollständig funktionierendem Getriebe durchgeführt werden muss, genügt hier grundsätzlich eine Hamming-Distanz von eins zu den jeweils benachbarten Positionen, wobei jedoch zu allen anderen Schaltpositionen die gleiche Hamming-Distanz eingehalten werden muss, die jeweils in der Gruppe notwendig ist (z.B. darf die Position ND eine Hamming-Distanz von eins zu N und zu D haben; jedoch muss die Hamming-Distanz zu R mindestens vier betragen). Dies ist notwendig, damit zum Beispiel eine fehlerbehaftete R-Position nicht fälschlicherweise für eine fehlerbehaftete DL-Position gehalten wird.

Fasst man diese Forderungen zusammen, so folgt daraus, dass minimal sechs Sensoren benötigt werden, um alle Positionen sicher detektieren zu können. Dabei soll eine entsprechende Schaltsensoranordnung mit sechs Sensoren eine minimale Baugröße aufweisen.

Dabei ist als zusätzliche Anforderung zu beachten, dass üblicherweise verwendete Schalthebel zwischen P und R einen doppelt so großen Abstand vorsehen wie zwischen den anderen Positionen. Dies bedeutet, dass in einer konventionellen Bauweise für einen 7-Positions-Schalthebel (PRND) eine Magnetsensorfläche von 54 Einheiten Größe vorgesehen werden muss (7*6 Felder, wobei die ersten beiden Felder doppelt so groß dimensioniert sind wie die übrigen). Bei einem 9-Positions-Schalthebel (PRNDL) ist sogar ein 66 Einheiten großes Feld notwendig.

Es können jedoch auch für 7- bzw. 9-Positions-Schalthebel Codierungen gefunden werden, die den vorstehend geforderten Hamming-Distanzen genügen, wobei die einzelnen Sensorspuren soweit selbstähnlich sind, dass diese durch Verschieben und Übereinanderlegen zusammengefasst werden können. Werden alle möglichen Codierungen betrachtet, so folgt daraus, dass je nach Anzahl der gewünschten Sensorspuren gegebenenfalls nur jeweils eine Codierung zu einer wirklich minimalen magnetisierten Fläche führt.

Um Spuren mit stets äquidistanten Bitmustern zu erhalten, wird der doppelt so große P-Bereich in entsprechend viele Zwischenpositionen aufgeteilt, so dass mit der PR-Zwischenposition insgesamt vier P-Positionen berücksichtigt werden. Dabei dürfen die ersten drei P-Positionen jeweils die gleiche Codierung aufweisen, da eine Unterscheidung dieser Positionen nicht notwendig ist.

Für diese Methode ergibt sich folgendes Codierungsschema für einen 7-Positions-Schalthebel (PRND):

**(Tabelle 1)**

| | **D6** | **D5** | **D4** | **D3** | **D2** | **D1** |
|---|---|---|---|---|---|---|
| **P1** | X | O | X | O | O | O |
| **P2** | X | O | X | O | O | O |
| **P3** | X | X | X | X | O | O |
| **PR** | X | X | X | O | O | O |
| **R** | O | X | X | O | X | X |
| **RN** | O | X | O | O | O | O |
| **N** | O | X | O | X | O | O |
| **ND** | O | O | O | X | O | O |
| **D** | X | O | O | X | X | X |

Dabei bedeutet "X" logisch positiv (entsprechend "1") und "O" bedeutet logisch negativ (entsprechend "0"), wobei die einzelnen Sensoren 1 bis 6 untereinander ausgetauscht werden bzw. einzelne Sensoren auch invertiert werden können. Anzumerken ist, dass ungeachtet der Tatsache, dass die Sensoren 1 und 2 das jeweils gleiche Bitmuster abtasten, diese Sensoren trotzdem beide vorhanden sein müssen, um die geforderten Hamming-Distanzen sicherstellen zu können. Mit dieser Codierung folgt direkt die folgende Hamming-Distanz-Tabelle:

**(Tabelle 2)**

| | **P1** | **P2** | **P3** | **PR** | **R** | **RN** | **N** | **ND** | **D** |
|---|---|---|---|---|---|---|---|---|---|
| **P1** | 0 | 0 | 2 | 1 | 4 | 3 | 4 | 3 | 4 |
| **P2** | 0 | 0 | 2 | 1 | 4 | 3 | 4 | 3 | 4 |
| **P3** | 2 | 2 | 0 | 1 | 4 | 3 | 2 | 3 | 4 |
| **PR** | 1 | 1 | 1 | 0 | 3 | 2 | 3 | 4 | 5 |
| **R** | 4 | 4 | 4 | 3 | 0 | 3 | 4 | 5 | 4 |
| **RN** | 3 | 3 | 3 | 2 | 3 | 0 | 1 | 2 | 5 |
| **N** | 4 | 4 | 2 | 3 | 4 | 1 | 0 | 1 | 4 |
| **ND** | 3 | 3 | 3 | 4 | 5 | 2 | 1 | 0 | 3 |
| **D** | 4 | 4 | 4 | 5 | 4 | 5 | 4 | 3 | 0 |

Wie ersichtlich, wird bei den sicherheitskritischen Übergängen eine Hamming-Distanz von mindestens vier, bei den weniger kritischen Übergängen zwischen Hauptschaltpositionen eine Hamming-Distanz von wenigstens zwei sowie bei den Zwischenpositionen eine Hamming-Distanz von eins oder mehr erzielt.

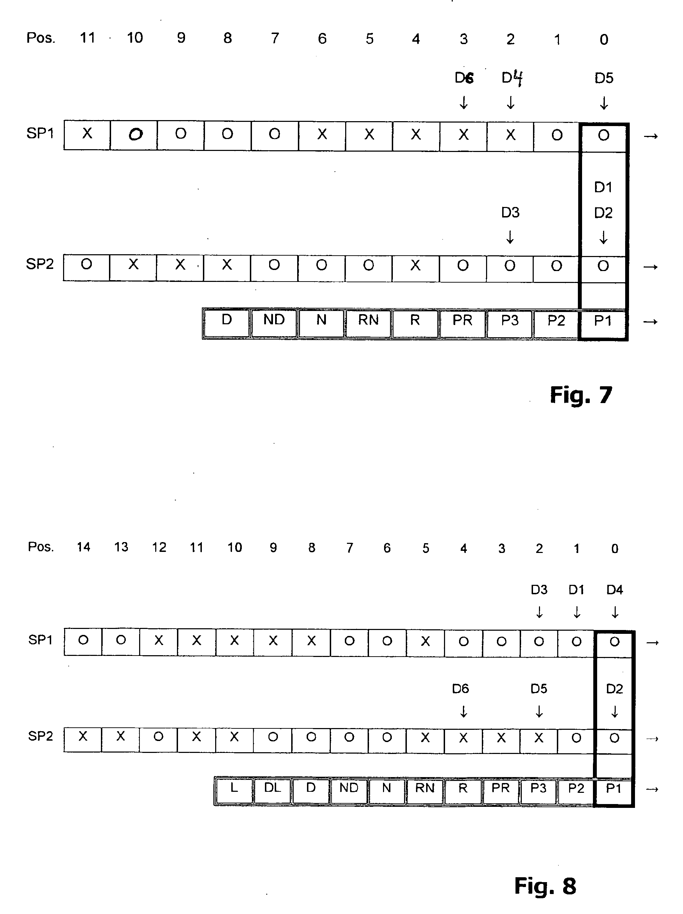

Die in Tabelle 1 dargestellte Bitmustercodierung lässt sich mittels lediglich zweier Sensorspuren SP1, SP2 mit einer Länge von jeweils 12 Bit codieren, wie in Figur 7 dargestellt. In der schematischen Darstellung dieser Figur werden die Sensorspuren SP1, SP2 durch Verschieben des Schalthebels linear (in Pfeilrichtung nach rechts) gegenüber den Sensorelementen verschoben. Die jeweils aktuelle Schaltstellung ist durch den stark umrandeten Rahmen rechts in der Zeichnung angedeutet.

Die lineare Darstellung in der Zeichnung ist lediglich beispielhaft zu verstehen; selbstverständlich können die Spuren auch bogenförmig angeordnet sein oder es kann eine Bewegung der Sensoren gegenüber den feststehenden Sensorspuren stattfinden.

Durch die in Figur 7 dargestellte Anordnung der sechs Sensorelemente D1 bis D6 kann die Sensorfläche insgesamt auf 24 Einheiten reduziert werden; dies sind nur 44 Prozent der ursprünglich benötigten Fläche.

Eine alternative Codierung lässt bei einem 7-Positions-Sensor eine Reduktion auf eine Sensorspur von 18 Bit Länge zu:

**(Tabelle 3)**

| | **D6** | **D5** | **D4** | **D3** | **D2** | **D1** |
|---|---|---|---|---|---|---|
| **P1** | X | O | X | O | O | O |
| **P2** | X | O | X | O | O | O |
| **P3** | O | O | X | X | O | O |
| **PR** | O | O | O | O | X | O |
| **R** | O | X | O | O | O | X |
| **RN** | O | O | O | O | O | O |
| **N** | X | O | O | X | O | O |
| **ND** | X | O | X | X | X | O |
| **D** | X | X | X | X | X | X |

Damit ergeben sich folgende Hamming-Distanzen:

**(Tabelle 4)**

| | **P1** | **P2** | **P3** | **PR** | **R** | **RN** | **N** | **ND** | **D** |
|---|---|---|---|---|---|---|---|---|---|
| **P1** | 0 | 0 | 2 | 3 | 4 | 2 | 2 | 2 | 4 |
| **P2** | 0 | 0 | 2 | 3 | 4 | 2 | 2 | 2 | 4 |
| **P3** | 2 | 2 | 0 | 3 | 4 | 2 | 2 | 2 | 4 |
| **PR** | 3 | 3 | 3 | 0 | 3 | 1 | 3 | 3 | 5 |
| **R** | 4 | 4 | 4 | 3 | 0 | 2 | 4 | 6 | 4 |
| **RN** | 2 | 2 | 2 | 1 | 2 | 0 | 2 | 4 | 6 |
| **N** | 2 | 2 | 2 | 3 | 4 | 2 | 0 | 2 | 4 |
| **ND** | 2 | 2 | 2 | 3 | 6 | 4 | 2 | 0 | 2 |
| **D** | 4 | 4 | 4 | 5 | 4 | 6 | 4 | 2 | 0 |

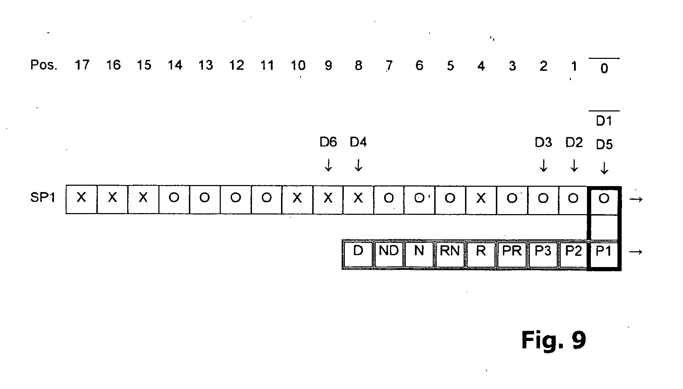

Eine entsprechende Anordnung der Sensorelemente D1 bis 6 entlang einer einzigen Sensorspur SP1 mit einer Länge von 18 Bit ist in Figur 9 dargestellt.

Mit dieser Anordnung wird nur noch ein Drittel der ursprünglich benötigten Fläche für die Sensorspur verwendet.

Für einen 9-Positions-Sensor mit einer zusätzlichen L-Stellung und entsprechenden Zwischenstellungen (PRNDL) führt die folgende Codierung zu einer minimalen benötigten Fläche:

**(Tabelle 5)**

| | **D6** | **D5** | **D4** | **D3** | **D2** | **D1** |
|---|---|---|---|---|---|---|
| **P1** | X | X | O | O | O | O |
| **P2** | X | X | O | O | O | O |
| **P3** | O | X | O | O | X | O |
| **PR** | O | O | O | X | X | O |
| **R** | O | O | O | O | X | X |
| **RN** | O | O | X | O | X | O |
| **N** | X | O | O | X | O | O |
| **ND** | X | X | O | X | O | X |
| **D** | O | X | X | X | O | X |
| **DL** | X | O | X | X | O | X |
| **L** | X | X | X | X | X | X |

Daraus ergeben sich folgende Hamming-Distanzen:

**(Tabelle 6)**

| | **P1** | **P2** | **P3** | **PR** | **R** | **RN** | **N** | **ND** | **D** | **DL** | **L** |
|---|---|---|---|---|---|---|---|---|---|---|---|
| **P1** | 0 | 0 | 2 | 4 | 4 | 4 | 2 | 2 | 4 | 4 | 4 |
| **P2** | 0 | 0 | 2 | 4 | 4 | 4 | 2 | 2 | 4 | 4 | 4 |
| **P3** | 2 | 2 | 0 | 2 | 2 | 2 | 4 | 4 | 4 | 6 | 4 |
| **PR** | 4 | 4 | 2 | 0 | 2 | 2 | 2 | 4 | 4 | 4 | 4 |
| **R** | 4 | 4 | 2 | 2 | 0 | 2 | 4 | 4 | 4 | 4 | 4 |
| **RN** | 4 | 4 | 2 | 2 | 2 | 0 | 4 | 6 | 4 | 4 | 4 |
| **N** | 2 | 2 | 4 | 2 | 4 | 4 | 0 | 2 | 4 | 2 | 4 |
| **ND** | 2 | 2 | 4 | 4 | 4 | 6 | 2 | 0 | 2 | 2 | 2 |
| **D** | 4 | 4 | 4 | 4 | 4 | 4 | 4 | 2 | 0 | 2 | 2 |
| **DL** | 4 | 4 | 6 | 4 | 4 | 4 | 2 | 2 | 2 | 0 | 2 |
| **L** | 4 | 4 | 4 | 4 | 4 | 4 | 4 | 2 | 2 | 2 | 0 |

Die entsprechende Anordnung der Sensorelemente ist in Figur 8 dargestellt.

Die benötigte Fläche wird damit auf 30 Einheiten reduziert (und beträgt damit ebenfalls nur ca. 45 % der üblicherweise benötigten Fläche).

Analog lässt sich auch eine Codierung für einen 9-Positions-Sensor mit nur einer Spur finden.

Somit wird im Rahmen der Erfindung durch Kombination einer den zur Verfügung stehenden Bitkombinationsraum optimal ausnutzenden statischen Fehlererkennung und -korrektur sowie einer dynamischen Erkennung von Zwischenstellungen und einer dynamischen Fehlerkorrektur eine optimale Erkennungssicherheit gewährleistet.

## Patentansprüche

1. Anordnung zur Bestimmung der aktuellen Schaltstellung eines Schalthebels in einem Fahrzeug, der zwischen mehreren diskreten Schaltpositionen verschiebbar bzw. verschwenkbar ist, mit einem Positionsgeber, der bei ordnungsgemäßem Zustand der Anordnung für jede Schalthebelposition ein vorgegebenes Bitmuster mit einer für alle Bitmuster übereinstimmenden Bitanzahl N an eine Auswerteinheit übermittelt, wobei die Codierung des Bitmusters eine Redundanz aufweist, mittels derer die Auswerteinheit fehlerhaft von dem Positionsgeber erfasste und/oder zu der Auswerteeinheit übertragene Bits in gewissem Umfang erkennen und/oder korrigieren kann,
**dadurch gekennzeichnet, dass**
die Bit-Codierung der einzelnen Schaltpositionen derart gewählt ist, dass bei Aufteilung sämtlicher möglicher Übergänge zwischen den Schaltpositionen in eine sicherheitskritische Gruppe, zu der wenigstens die Übergänge zwischen den Vorwärtsfahrt- und den Rückwärtsfahrt-Schaltpositionen sowie zwischen einer Neutral-Schaltposition N und einer Vorwärtsfahrt-Schaltposition D sowie der Neutral-Schaltposition N und einer Rückwärtsfahrt-Schaltposition R gehören, und in eine weniger sicherheitskritische Gruppe, zu der wenigstens die Übergänge zwischen verschiedenen Vorwärtsfahrt-Schaltpositionen und die Übergänge zwischen einer Parkund der Neutral-Schaltposition gehören, die Hamming-Distanz zwischen den Bitmustern für sämtliche Übergänge der sicherheitskritischen Gruppe jeweils mindestens einem vorgegebenen erhöhten Hamming-Distanzwert, der größer als zwei ist, entspricht, und dass die Hamming-Distanz zwischen den Bitmustern für sämtliche Übergänge der weniger sicherheitskritischen Gruppe jeweils kleiner als der erhöhte Hamming-Distanzwert ist, derart, dass die für die resultierende Codierung insgesamt benötigte Bitanzahl N geringer ist als die Bitanzahl bei einer Codierung, bei der die Hamming-Distanz für sämtliche möglichen Übergänge dem erhöhten Hamming-Distanzwert entspräche.

2. Anordnung nach Anspruch 1,
**dadurch gekennzeichnet, dass**
der Schalthebel als Schalthebel eines automatischen Getriebes mit den Schaltpositionen P (Parkposition), R (Rückwärts), N (Neutral), D (Drive, Vorwärtsfahrt) und L (Low, Vorwärtsfahrt in niedrigen Gängen) ausgebildet ist, und dass der Positionsgeber ein Bitmuster mit einer Anzahl von fünf Bits ausgibt, wobei die Hamming-Distanz zwischen den Bitmustern für die Übergänge zwischen den Schaltpositionen R-D und umgekehrt bzw. R-L und umgekehrt jeweils vier beträgt, die Hamming-Distanz für P-N und umgekehrt bzw. L-D und umgekehrt jeweils zwei beträgt und die Hamming-Distanz für die verbleibenden Übergänge jeweils drei beträgt.

3. Anordnung nach Anspruch 1 oder 2,
**dadurch gekennzeichnet, dass**
keines der den Schaltpositionen zugeordneten Muster entweder nur Nullbits oder nur Einsbits enthält, wobei bei einer Anzahl N von fünf Bits jedes den Schaltpositionen zugeordnete zulässige Bitmuster vorzugsweise entweder zwei oder drei Einsbits aufweist.

4. Anordnung nach mindestens einem der Ansprüche 1 bis 3,
**dadurch gekennzeichnete dass**
der Positionsgeber ein Kodierelement sowie eine der Anzahl der zur Codierung verwendeten Bits N entsprechende Zahl von magnetosensitiven Sensorelementen aufweist, deren Ausgangssignal jeweils zu einem binären Signal konditioniert wird, wobei das Kodierelement und die Sensorelemente bei Bewegung des Schalthebels relativ zueinander verschoben oder verschwenkt werden, und wobei dem Kodierelement durch Permanentmagnetisierung ein von den Sensorelementen erfassbares magnetisches Muster derart aufgeprägt ist, dass die Sensorelemente bei ordnungsgemäßen Zustand der Anordnung in den jeweiligen Schaltpositionen entsprechend der vorgegebenen Codierung ein binäres Ausgangssignal ausgeben.

5. Anordnung nach Anspruch 4,
**dadurch gekennzeichnet, dass**
das Kodierelement als drehbare Scheibe mit konzentrisch angeordneten Magnetspuren ausgebildet ist, wobei die Magnetspuren mit zunehmender Anzahl der gemäß der Codierung erforderlichen magnetischen Feldänderungen weiter außen auf der Scheibe angeordnet sind.

6. Anordnung nach mindestens einem der Ansprüche 1 bis 5,
**dadurch gekennzeichnet, dass**
bei einem automatischen Getriebes mit den Schaltpositionen P (Parkposition), R (Rückwärts), N (Neutral), D (Drive, Vorwärtsfahrt) und L (Low, Vorwärtsfahrt in niedrigen Gängen) die Codierung mittels fünf Bits D1 bis D5 den Schaltpositionen gemäß folgender Tabelle zugeordnet ist, wobei die Einträge "0" und "1" in der Tabelle auch insgesamt invertiert werden können:
| | **D5** | **D4** | **D3** | **D2** | **D1** |
|---|---|---|---|---|---|
| **P** | 0 | 1 | 1 | 0 | 0 |
| **R** | 1 | 0 | 1 | 1 | 0 |
| **N** | 0 | 0 | 1 | 0 | 1 |
| **D** | 0 | 1 | 0 | 1 | 1 |
| **L** | 1 | 1 | 0 | 0 | 1 |

7. Anordnung nach mindestens einem der Ansprüche 1 bis 5,
**dadurch gekennzeichnet, dass**
der Schalthebel zwischen diskreten Hauptschaltpositionen und zusätzlich detektierbaren Zwischenschaltpositionen, die eine Schalthebelstellung jeweils zwischen den Hauptschaltpositionen anzeigen, verschiebbar ist, und dass die Bit-Codierung der einzelnen Schaltpositionen derart gewählt ist, dass die Hamming-Distanz für Übergänge zwischen den Zwischenschaltpositionen und den jeweils benachbarten Hauptschaltpositionen wenigstens eins beträgt.

8. Anordnung nach Anspruch 7,
**dadurch gekennzeichnet, dass**
die Hauptschaltpositionen die Positionen P1, R, N, D und optional L umfassen, wobei die P-Schaltposition entlang ihres Schaltweges ein oder mehrere Unterschaltpositionen (P2, P3) umfassen kann;
dass die Zwischenschaltpositionen die Positionen PR, RN, ND und optional DL umfassen;
dass die Bitanzahl N des Bitmusters für die Codierung sechs beträgt;
dass die Hamming-Distanz für sicherheitskritische Übergänge wenigstens vier beträgt, und
dass die Hamming-Distanz für Übergänge zwischen weniger sicherheitskritischen Hauptschaltpositionen wenigstens zwei beträgt.

9. Anordnung nach mindestens einem der Ansprüche 1 bis 8,
**dadurch gekennzeichnet, dass**
die Bitmuster in ein oder mehreren Sensorspuren codiert sind, die von Sensorelementen, die jeweils den einzelnen Bits des Bitmusters zugeordnet sind, sequentiell erfasst werden, wobei die Bitmuster auf der oder den Sensorspuren eine derartige Selbstähnlichkeit aufweisen, dass die Bitmuster für mehrere Sensorelemente auf jeweils einer gemeinsamen Sensorspur codiert werden können, wobei die zugehörigen Sensorelemente entlang der Sensorspuren versetzt angeordnet sind.

10. Anordnung nach Anspruch 7 oder 8,
**dadurch gekennzeichnet, dass**
als Schaltpositionen die Hauptschaltpositionen P1 mit Unterschaltpositionen P2 und P3; R; N; D sowie als Zwischenschaltpositionen die Positionen PR, RN, ND vorgesehen sind, und dass die Codierung der einzelnen Bits D1 bis D6 des Bitmusters abhängig von der jeweiligen Schaltposition in einer ersten Variante wie folgt ausgebildet ist:
| | **D6** | **D5** | **D4** | **D3** | **D2** | **D1** |
|---|---|---|---|---|---|---|
| **P1** | X | O | X | O | O | O |
| **P2** | X | O | X | O | O | O |
| **P3** | X | X | X | X | O | O |
| **PR** | X | X | X | O | O | O |
| **R** | O | X | X | O | X | X |
| **RN** | O | X | O | O | O | O |
| **N** | O | X | O | X | O | O |
| **ND** | O | O | O | X | O | O |
| **D** | X | O | O | X | X | X |
oder in einer zweiten Variante wie folgt ausgebildet ist:
| | **D6** | **D5** | **D4** | **D3** | **D2** | **D1** |
|---|---|---|---|---|---|---|
| **P1** | X | O | X | O | O | O |
| **P2** | X | O | X | O | O | O |
| **P3** | O | O | X | X | O | O |
| **PR** | O | O | O | O | X | O |
| **R** | O | X | O | O | O | X |
| **RN** | O | O | O | O | O | O |
| **N** | X | O | O | X | O | O |
| **ND** | X | O | X | X | X | O |
| **D** | X | X | X | X | X | X |
wobei in beiden Varianten ein oder mehrere Bitmusterreihen D1 bis D6 gegeneinander ausgetauscht und/oder invertiert und/oder in umgekehrter Reihenfolge angeordnet werden können.

11. Anordnung nach Anspruch 10,
**dadurch gekennzeichnet, dass**
bei einer Codierung gemäß der ersten Variante zwei Sensorspuren SP1 und SP2 vorgesehen sind, die folgende jeweils 12 Bit lange Codierung aufweisen, wobei eine Spur oder beide Spuren auch invertiert sein können:
| Position Nr. | 11 | 10 | 9 | 8 | 7 | 6 | 5 | 4 | 3 | 2 | 1 | 0 |
|---|---|---|---|---|---|---|---|---|---|---|---|---|
| Spur SP1 | X | O | O | O | O | X | X | X | X | X | O | O |
| Spur SP2 | O | X | X | X | O | O | O | X | O | O | O | O |
wobei die Sensorelemente D1 und D2 das Bitmuster der Sensorspur SP2 an Position 0 abtasten, das Sensorelement D3 das Bitmuster der Sensorspur SP2 an Position 2 abtastet, das Sensorelement D6 das Bitmuster der Sensorspur SP1 an Position 3 abtastet, das Sensorelement D5 das Bitmuster der Sensorspur SP1 an Position 0 abtastet und das Sensorelement D4 das Bitmuster der Sensorspur SP1 an Position 2 abtastet;
oder
dass bei einer Codierung gemäß der zweiten Variante eine einzige Sensorspur SP1 vorgesehen ist, die folgende 18 Bit lange Codierung aufweist, wobei die Spur SP1 auch invertiert sein kann:
| Pos. Nr. | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|
| Spur SP1 | X | X | X | O | O | O | O | X | X | X | O | O | O | X | O | O | O | O |
wobei das Sensorelement D1 das Bitmuster an Position 0 abtastet, das Sensorelement D2 das Bitmuster an Position 1 abtastet, das Sensorelement D3 das Bitmuster an Position 2 abtastet, das Sensorelement D4 das Bitmuster an Position 8 abtastet, das Sensorelement D5 das Bitmuster an Position 0 abtastet und das Sensorelement D6 das Bitmuster an Position 9 abtastet.

12. Anordnung nach Anspruch 7 oder 8,
**dadurch gekennzeichnet, dass**
als Hauptschaltpositionen die Schaltpositionen P1 mit Unterschaltpositionen P2 und P3; R; N; D; L sowie als Zwischenschaltpositionen die Schaltpositionen PR, RN, ND, DL vorgesehen sind, und dass die Codierung der einzelnen Bits D1 bis D6 des Bitmusters abhängig von der jeweiligen Schaltposition wie folgt gewählt ist:
| | **D6** | **D5** | **D4** | **D3** | **D2** | **D1** |
|---|---|---|---|---|---|---|
| **P1** | X | X | O | O | O | O |
| **P2** | X | X | O | O | O | O |
| **P3** | O | X | O | O | X | O |
| **PR** | O | O | O | X | X | O |
| **R** | O | O | O | O | X | X |
| **RN** | O | O | X | O | X | O |
| **N** | X | O | O | X | O | O |
| **ND** | X | X | O | X | O | X |
| **D** | O | X | X | X | O | X |
| **DL** | X | O | X | X | O | X |
| **L** | X | X | X | X | X | X |
wobei ein oder mehrere Bitmusterreihen D1 bis D6 gegeneinander ausgetauscht und/oder invertiert oder in umgekehrter Reihenfolge angeordnet sein können.

13. Anordnung nach Anspruch 12,
**dadurch gekennzeichnet, dass**
zwei Sensorspuren SP1 und SP2 vorgesehen sind, die folgende jeweils 15 Bit lange Codierung aufweisen, wobei eine der Spuren oder beide Spuren SP1, SP2 auch invertiert sein können:
| Position Nr. | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|
| Spur SP1 | O | O | X | X | X | X | X | O | O | X | O | O | O | O | O |
| Spur SP2 | X | X | O | X | X | O | O | O | O | X | X | X | X | O | O |
wobei das Sensorelement D1 das Bitmuster der Sensorspur SP1 an Position 1 abtastet, das Sensorelement D2 das Bitmuster der Sensorspur SP2 an Position 0 abtastet, das Sensorelement D3 das Bitmuster der Sensorspur SP1 an Position 2 abtastet, das Sensorelement D4 das Bitmuster der Sensorspur SP1 an Position 0 abtastet, das Sensorelement D5 das Bitmuster der Sensorspur SP2 an Position 2 abtastet und das Sensorelement D6 das Bitmuster der Sensorspur SP2 an Position 4 abtastet.

## Claims

1. Device for determining the current shift lever position in a vehicle, which shift lever can be shifted or pivoted between a plurality of discrete shift positions, having a position sensor which, given a satisfactory state of the device, transmits, to an evaluation unit, a predefined bit pattern for each shift lever position with a corresponding bit number N for all the bit patterns, wherein the encoding of the bit pattern has a redundancy by means of which the evaluation unit can, to a certain extent, detect and/or correct bits which have been incorrectly sensed by the position sensor and/or transmitted to the evaluation unit, **characterized in that** the bit encoding of the individual shifted positions is selected in such a way that when all the possible transitions between the shifted positions have been assigned to a safety-critical group, which includes at least the transitions between the forward-travel and reverse-travel shifted positions and between a neutral shifted position N and a forward-travel shifted position D as well as the neutral shifted position N and a reverse-travel shifted position R, and to a less safety-critical group which includes at least the transitions between various forward-travel shifted positions and the transitions between a parked shifted position and the neutral shifted position, the Hamming distance between the bit patterns for all the transitions of the safety-critical group corresponds in each case at least to a predefined increased Hamming distance value, which is greater than two, and **in that** the Hamming distance between the bit patterns for all the transitions of the less safety-critical group is in each case smaller than the increased Hamming distance value such that the total bit number N required for the resulting encoding is smaller than the bit number for encoding in which the Hamming distance for all the possible transitions would correspond to the increased Hamming distance value.

2. Device according to Claim 1, **characterized in that** the shift lever is embodied as a shift lever of an automatic transmission with the shifted positions P (parked position), R (reverse), N (neutral), D (drive, forward travel) and L (low, forward travel in low gear speeds), and **in that** the position sensor outputs a bit pattern with a number of five bits, wherein the Hamming distance between the bit patterns for the transitions between the shifted positions R-D and vice versa or R-L and vice versa is in each case four, the Hamming distance for P-N and vice versa or L-D and vice versa is in each case two, and the Hamming distance for the remaining transitions is in each case three.

3. Device according to Claim 1 or 2, **characterized in that** none of the patterns assigned to the shifted positions contains either only zero bits or only single bits, wherein, given a number N of five bits, each permissible bit pattern assigned to the shifted positions preferably has either two or three single bits.

4. Device according to at least one of Claims 1 to 3, **characterized in that** the position sensor has an encoding element and a number of magneto-sensitive sensor elements corresponding to the number of bits N used for the encoding, the output signal of which sensor element is conditioned in each case to form a binary signal, wherein the encoding element and the sensor elements are shifted or pivoted in relation to one another when the shift lever moves, and wherein a magnetic pattern which can be sensed by the sensor elements is impressed on the encoding element by permanent magnetization in such a way that in the satisfactory state of the device the sensor elements output a binary output signal in the respective shifted positions corresponding to the predefined encoding.

5. Device according to Claim 4, **characterized in that** the encoding element is embodied as a rotatable disc with concentrically arranged magnetic tracks, wherein the magnetic tracks are arranged further toward the outside on the disc as the number of magnetic field changes necessary according to encoding increases.

6. Device according to at least one of Claims 1 to 5, **characterized in that,** in an automatic transmission with the shifted positions P (parked position), R (reverse), N (neutral), D (drive, forward travel) and L (low, forward travel in low gear speeds), the encoding by means of five bits D1 to D5 is assigned to the shifted positions according to the following table, wherein the entries "0" and "1" in the table can also be inverted in their entirety:
| | D5 | D4 | D3 | D2 | D1 |
|---|---|---|---|---|---|
| **P** | 0 | 1 | 1 | 0 | 0 |
| **R** | 1 | 0 | 1 | 1 | 0 |
| **N** | 0 | 0 | 1 | 0 | 1 |
| **D** | 0 | 1 | 0 | 1 | 1 |
| **L** | 1 | 1 | 0 | 0 | 1 |

7. Device according to at least one of Claims 1 to 5, **characterized in that** the shift lever can be shifted between discrete main shifted positions and additionally detectable intermediate shifted positions which indicate a shift lever position in each case between the main shifted positions, and
**in that** the bit encoding of the individual shifted positions is selected in such a way that the Hamming distance for transitions between the intermediate shifted positions and the respectively adjacent main shifted positions is at least one.

8. Device according to Claim 7, **characterized in that** the main shifted positions comprise the positions P1, R, N, D and optionally L, wherein the P shifted position can comprise one or more secondary shifted positions (P2, P3) along its shifting path;
**in that** the intermediate shifted positions comprise the positions PR, RN, ND and optionally DL;
**in that** the bit number N of the bit pattern for the encoding is six;
**in that** the Hamming distance for safety-critical transitions is at least four; and
**in that** the Hamming distance for transitions between a small number of safety-critical main shifted positions is at least two.

9. Device according to at least one of Claims 1 to 8, **characterized in that** the bit patterns are encoded in one or more sensor tracks which are sensed sequentially by sensor elements which are respectively assigned to the individual bits of the bit pattern, wherein the bit patterns on the sensor track or tracks are similar to one another in such a way that the bit patterns for a plurality of sensor elements can be encoded on one respective common sensor track, wherein the associated sensor elements are arranged offset along the sensor tracks.

10. Device according to Claim 7 or 8, **characterized in that** the main shifted positions P1 with secondary shifted positions P2 and P3; R; N; D are provided as shifted positions, and the positions PR, RN, ND are provided as intermediate shifted positions, and **in that** the encoding of the individual bits D1 to D6 of the bit pattern is embodied as a function of the respective shifted position in a first variant as follows:
| | **D6** | **D5** | **D4** | **D3** | **D2** | **D1** |
|---|---|---|---|---|---|---|
| **P1** | X | O | X | O | O | O |
| **P2** | X | O | X | O | O | O |
| **P3** | X | X | X | X | O | O |
| **PR** | X | X | X | O | O | O |
| **R** | O | X | X | O | X | X |
| **RN** | O | X | O | O | O | O |
| **N** | O | X | O | X | O | O |
| **ND** | O | O | O | X | O | O |
| **D** | X | O | O | X | X | X |
or is embodied in a second variant as follows:
| | **D6** | **D5** | **D4** | **D3** | **D2** | **D1** |
|---|---|---|---|---|---|---|
| **P1** | X | O | X | O | O | O |
| **P2** | X | O | X | O | O | O |
| **P3** | O | O | X | X | O | O |
| **PR** | O | O | O | O | X | O |
| **R** | O | X | O | O | O | X |
| **RN** | O | O | O | O | O | O |
| **N** | X | O | O | X | O | O |
| **ND** | X | O | X | X | X | O |
| **D** | X | X | X | X | X | X |
wherein in both variants one or more rows of bit patterns D1 to D6 can be interchanged with one another and/or inverted and/or arranged in a reverse order.

11. Device according to Claim 10, **characterized in that**, in the case of encoding in accordance with the first variant, two sensor tracks SP1 and SP2 are provided which each have the following 12-bit-long encoding, wherein one track or both tracks can also be inverted:
| Position No. | 11 | 10 | 9 | 8 | 7 | 6 | 5 | 4 | 3 | 2 | 1 | 0 |
|---|---|---|---|---|---|---|---|---|---|---|---|---|
| Track SP1 | X | O | O | O | O | X | X | X | X | X | O | O |
| Track SP2 | O | X | X | X | O | O | O | X | O | O | O | O |
wherein the sensor elements D1 and D2 sense the bit pattern of the sensor track SP2 at position 0, the sensor element D3 senses the bit pattern of the sensor track SP2 at position 2, the sensor element D6 senses the bit pattern of the sensor track SP1 at position 3, the sensor element D5 senses the bit pattern of the sensor track SP1 at position 0, and the sensor element D4 senses the bit pattern of the sensor track SP1 at position 2;
or
**in that**, in the case of encoding according to the second variant, a single sensor track SP1 is provided which has the following 18-bit-long encoding, wherein the track SP1 can also be inverted:
| Position No. | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|
| Track SP1 | X | X | X | O | O | O | O | X | X | X | O | O | O | X | O | O | O | O |
wherein the sensor element D1 senses the bit pattern at position 0, the sensor element D2 senses the bit pattern at position 1, the sensor element D3 senses the bit pattern at position 2, the sensor element D4 senses the bit pattern at position 8, the sensor element D5 senses the bit pattern at position 0, and the sensor element D6 senses the bit pattern at position 9.

12. Device according to Claim 7 or 8, **characterized in that** the shifted positions P1 are provided as main shifted positions, with secondary shifted positions P2 and P3; R; N; D; L, and the shifted positions PR, RN, ND, DL are provided as intermediate shifted positions, and **in that** the encoding of the individual bits D1 to D6 of the bit pattern is selected as a function of the respective shifted position as follows:
| | **D6** | **D5** | **D4** | **D3** | **D2** | **D1** |
|---|---|---|---|---|---|---|
| **P1** | X | X | O | O | O | O |
| **P2** | X | X | O | O | O | O |
| **P3** | O | X | O | O | X | O |
| **PR** | O | O | O | X | X | O |
| **R** | O | O | O | O | X | X |
| **RN** | O | O | X | O | X | O |
| **N** | X | O | O | X | O | O |
| **ND** | X | X | O | X | O | X |
| **D** | O | X | X | X | O | X |
| **DL** | X | O | X | X | O | X |
| **L** | X | X | X | X | X | X |
wherein one or more rows of bit patterns D1 to D6 can be interchanged with one another and/or inverted or arranged in a reverse order.

13. Device according to Claim 12, **characterized in that** two sensor tracks SP1 and SP2 are provided which have the following respective 15-bit-long encoding, wherein one of the tracks or both tracks SP1, SP2 can also be inverted:
| Position No. | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|
| Track SP1 | O | O | X | X | X | X | X | O | O | X | O | O | O | O | O |
| Track SP2 | X | X | O | X | X | O | O | O | O | X | X | X | X | O | O |
wherein the sensor element D1 senses the bit pattern of the sensor track SP1 at position 1, the sensor element D2 senses the bit pattern of the sensor track SP2 at position 0, the sensor element D3 senses the bit pattern of the sensor track SP1 at position 2, the sensor element D4 senses the bit pattern of the sensor track SP1 at position 0, the sensor element D5 senses the bit pattern of the sensor track SP2 at position 2, and the sensor element D6 senses the bit pattern of the sensor track SP2 at position 4.

## Revendications

1. Arrangement pour déterminer la position d'engagement actuelle d'un levier de changement de rapport dans un véhicule, lequel peut être déplacé ou basculé entre différentes positions d'engagement discrètes, comprenant un détecteur de position qui, si l'arrangement se trouve dans un état conforme à sa destination, communique à une unité d'interprétation, pour chaque position du levier de changement de rapport, un modèle binaire prédéfini contenant un nombre de bits N concordant pour tous les modèles binaires, le codage du modèle binaire présentant une redondance au moyen de laquelle l'unité d'interprétation peut, dans une certaine mesure, détecter et/ou corriger les bits détectés par le détecteur de position et/ou transmis vers l'unité d'interprétation de manière erronée, **caractérisé en ce que** le codage binaire des positions d'engagement individuelles est choisi de telle sorte que lors de la répartition de toutes les transitions possibles entre les positions d'engagement en un groupe critique pour la sécurité auquel appartiennent au moins les transitions entre les positions d'engagement de marche avant et de marche arrière et aussi entre une position d'engagement du point mort N et une position d'engagement de marche avant D ainsi qu'entre une position d'engagement du point mort N et une position d'engagement de marche arrière R, et en un groupe moins critique pour la sécurité auquel appartiennent au moins les transitions entre différentes positions d'engagement de marche avant et les transitions entre une position de stationnement et une position d'engagement du point mort, la distance de Hamming entre les modèles binaires pour toutes les transitions du groupe critique pour la sécurité correspond à chaque fois au moins à une valeur de la distance de Hamming accrue prédéfinie qui est supérieure à deux, et que la distance de Hamming entre les modèles binaires pour toutes les transitions du groupe moins critique pour la sécurité est à chaque fois plus faible que la valeur de la distance de Hamming accrue de sorte que le nombre total de bits N nécessaire pour le codage résultant est inférieur au nombre de bits lors d'un codage avec lequel la distance de Hamming pour toutes les transitions possibles correspondrait à la valeur de la distance de Hamming accrue.

2. Arrangement selon la revendication 1, **caractérisé en ce que** le levier de changement de rapport est réalisé sous la forme d'un levier de changement de rapport d'une boîte de vitesses automatique comprenant les positions d'engagement P (position de stationnement), R (marche arrière), N (point mort), D (Drive, marche avant) et L (Low, marche avant aux petits rapports) et que le détecteur de position délivre un modèle binaire contenant cinq bits, la distance de Hamming entre les modèles binaires pour les transitions entre les positions d'engagement R-D et inversement ou R-L et inversement étant à chaque fois égale à quatre, la distance de Hamming pour P-N et inversement ou L-D et inversement étant à chaque fois égale à deux et la distance de Hamming pour les transitions restantes étant à chaque fois égale à trois.

3. Arrangement selon la revendication 1 ou 2, **caractérisé en ce qu'**aucun modèle associé aux positions d'engagement ne contient seulement des bits à 0 ou des bits à 1 et si N est égal à 5 bits, chacun des modèles binaires autorisés associés aux positions d'engagement présentant de préférence deux ou trois bits à 1.

4. Arrangement selon au moins l'une des revendications 1 à 3, **caractérisé en ce que** le détecteur de position présente un élément de codage ainsi qu'un nombre correspondant au nombre de bits N utilisés pour le codage d'éléments de détection magnétorésistifs dont le signal de sortie est à chaque fois conditionné en un signal binaire, l'élément de codage et les éléments de détection étant décalés ou basculés les uns par rapport aux autres lors d'un mouvement du levier de changement de rapport et un modèle magnétique détectable par les éléments de détection étant imprimé à l'élément de codage par magnétisation permanente de telle sorte que les éléments de détection, si l'arrangement se trouve dans un état conforme à sa destination, délivrent dans les positions d'engagement respectives un signal de sortie binaire correspondant au codage prédéfini.

5. Arrangement selon la revendication 4, **caractérisé en ce que** l'élément de codage est réalisé sous la forme d'un disque rotatif comportant des pistes magnétiques disposées de manière concentrique, les pistes magnétiques étant disposées plus à l'extérieur sur le disque à mesure de l'augmentation du nombre de changements de champ magnétique nécessaires selon le codage.

6. Arrangement selon au moins l'une des revendications 1 à 5, **caractérisé en ce que** dans le cas d'une boîte de vitesses automatique comprenant les positions d'engagement P (position de stationnement), R (marche arrière), N (point mort), D (Drive, marche avant) et L (Low, marche avant aux petits rapports), le codage au moyen de cinq bits D1 à D5 est associé aux positions d'engagement conformément au tableau suivant, les valeurs « 0 » et « 1 » dans le tableau pouvant également être globalement inversées :
| | **D5** | **D4** | **D3** | **D2** | **D1** |
|---|---|---|---|---|---|
| P | 0 | 1 | 1 | 0 | 0 |
| R | 1 | 0 | 1 | 1 | 0 |
| N | 0 | 0 | 1 | 0 | 1 |
| D | 0 | 1 | 0 | 1 | 1 |
| L | 1 | 1 | 0 | 0 | 1 |

7. Arrangement selon au moins l'une des revendications 1 à 5, **caractérisé en ce que** le levier de changement de rapport peut être déplacé entre des positions d'engagement principales discrètes et des positions d'engagement intermédiaires détectables supplémentaires qui indiquent à chaque fois une position du levier de changement de rapport entre les positions d'engagement principales et que le codage binaire des positions d'engagement individuelles est choisi de telle sorte que la distance de Hamming pour les transitions entre les positions d'engagement intermédiaires et les positions d'engagements principales à chaque fois voisines est au moins égale à un.

8. Arrangement selon la revendication 7, **caractérisé en ce que** les positions d'engagement principales comprennent les positions P1, R, N, D et, en option, L, la position d'engagement P pouvant inclure une ou plusieurs sous-positions d'engagement (P2, P3) le long de sa course de changement de rapport ;
que les positions d'engagement intermédiaires comprennent les positions PR, RN, ND et, en option, DL ;
que le nombre de bits N du modèle binaire pour le codage est égal à six ;
que la distance de Hamming pour les transitions critiques pour la sécurité est au moins égale à quatre ; et
que la distance de Hamming pour les transitions entre les positions d'engagement principales moins critiques pour la sécurité est au moins égale à deux.

9. Arrangement selon l'une des revendications 1 à 8, **caractérisé en ce que** les modèles binaires sont codés en une ou plusieurs pistes de détection qui sont détectées séquentiellement par les éléments de détection qui sont respectivement associés aux bits individuels du modèle binaire, les modèles binaires sur la ou les pistes de détection présentant une autosimilitude telle que les modèles binaires pour plusieurs éléments de détection peuvent à chaque fois être codés sur une piste de détection commune, les éléments de détection associés étant disposés de manière décalée le long des pistes de détection.

10. Arrangement selon la revendication 7 ou 8, **caractérisé en ce que** les positions d'engagement prévues sont les positions d'engagement principales P1 avec les sous-positions d'engagement P2 et P3 ; R ; N ; D et les positions d'engagement intermédiaires prévues sont les positions PR, RN, ND et que le codage des bits individuels D1 à D6 du modèle binaire dans une première variante est réalisé comme suit en fonction de la position d'engagement respective :
| | **D6** | **D5** | **D4** | **D3** | **D2** | **D1** |
|---|---|---|---|---|---|---|
| P1 | X | 0 | X | 0 | 0 | 0 |
| P2 | X | 0 | X | 0 | 0 | 0 |
| P3 | X | X | X | X | 0 | 0 |
| PR | X | X | X | 0 | 0 | 0 |
| R | 0 | X | X | 0 | X | X |
| RN | 0 | X | 0 | 0 | 0 | 0 |
| N | 0 | X | 0 | X | 0 | 0 |
| ND | 0 | 0 | 0 | X | 0 | 0 |
| D | X | 0 | 0 | X | X | X |
ou est réalisé comme suit dans une deuxième variante :
| | **D6** | **D5** | **D4** | **D3** | **D2** | **D1** |
|---|---|---|---|---|---|---|
| P1 | X | 0 | X | 0 | 0 | 0 |
| P2 | X | 0 | X | 0 | 0 | 0 |
| P3 | 0 | 0 | X | X | 0 | 0 |
| PR | 0 | 0 | 0 | 0 | X | 0 |
| R | 0 | X | 0 | 0 | 0 | X |
| RN | 0 | 0 | 0 | 0 | 0 | 0 |
| N | X | 0 | 0 | X | 0 | 0 |
| ND | X | 0 | X | X | X | 0 |
| D | X | X | X | X | X | X |
une ou plusieurs séries de modèle binaire D1 à D6 pouvant être échangées entre elles et/ou inversées et/ou disposées dans l'ordre inverse dans les deux variantes.

11. Arrangement selon la revendication 10, **caractérisé en ce que** lors d'un codage selon la première variante, sont prévues deux pistes de détection SP1 et SP2 qui présentent le codage ci-après à chaque fois de 12 bits de long, une piste ou les deux pistes pouvant également être inversées :
| N° de position | 11 | 10 | 9 | 8 | 7 | 6 | 5 | 4 | 3 | 2 | 1 | 0 |
|---|---|---|---|---|---|---|---|---|---|---|---|---|
| Piste SP1 | X | 0 | 0 | 0 | 0 | X | X | X | X | X | 0 | 0 |
| Piste SP2 | 0 | X | X | X | 0 | 0 | 0 | X | 0 | 0 | 0 | 0 |
les éléments de détection D1 et D2 échantillonnant le modèle binaire de la piste de détection SP2 à la position 0, l'élément de détection D3 échantillonnant le modèle binaire de la piste de détection SP2 à la position 2, l'élément de détection D6 échantillonnant le modèle binaire de la piste de détection SP1 à la position 3, l'élément de détection D5 échantillonnant le modèle binaire de la piste de détection SP1 à la position 0 et l'élément de détection D4 échantillonnant le modèle binaire de la piste de détection SP1 à la position 2 ;
ou
que lors d'un codage selon la deuxième variante, une seule piste de détection SP1 est prévue, laquelle présente le codage de 18 bits de long suivant, la piste SP1 pouvant également être inversés :
| N° pos. | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|
| Piste SP1 | X | X | X | 0 | 0 | 0 | 0 | X | X | X | 0 | 0 | 0 | X | 0 | 0 | 0 | 0 |
l'élément de détection D1 échantillonnant le modèle binaire à la position 0, l'élément de détection D2 échantillonnant le modèle binaire à la position 1, l'élément de détection D3 échantillonnant le modèle binaire à la position 2, l'élément de détection D4 échantillonnant le modèle binaire à la position 8, l'élément de détection D5 échantillonnant le modèle binaire à la position 0 et l'élément de détection D6 échantillonnant le modèle binaire à la position 9.

12. Arrangement selon la revendication 7 ou 8,
**caractérisé en ce que** les positions d'engagement principales prévues sont les positions d'engagement P1 avec les sous-positions d'engagement P2 et P3 ; R ; N ; D ; L et les positions d'engagement intermédiaires prévues sont les positions d'engagement PR, RN, ND, DL et que le codage des bits individuels D1 à D6 du modèle binaire est choisi comme suit en fonction de la position d'engagement respective :
| | **D6** | **D5** | **D4** | **D3** | **D2** | **D1** |
|---|---|---|---|---|---|---|
| P1 | X | X | 0 | 0 | 0 | 0 |
| P2 | X | X | 0 | 0 | 0 | 0 |
| P3 | 0 | X | 0 | 0 | X | 0 |
| PR | 0 | 0 | 0 | X | X | 0 |
| R | 0 | 0 | 0 | 0 | X | X |
| RN | 0 | 0 | X | 0 | X | 0 |
| N | X | 0 | 0 | X | 0 | 0 |
| ND | X | X | 0 | X | 0 | X |
| D | 0 | X | X | X | 0 | X |
| DL | X | 0 | X | X | 0 | X |
| L | X | X | X | X | X | X |
une ou plusieurs séries de modèle binaire D1 à D6 pouvant être échangées entre elles et/ou inversées ou disposées dans l'ordre inverse.

13. Arrangement selon la revendication 12,
**caractérisé en ce que** deux pistes de détection SP1 et SP2 sont prévues, lesquelles présentent le codage ci-après à chaque fois de 15 bits de long, l'une des pistes ou les deux pistes SP1, SP2 pouvant également être inversées :
| N° de position | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|
| Piste SP1 | 0 | 0 | X | X | X | X | X | 0 | 0 | X | 0 | 0 | 0 | 0 | 0 |
| Piste SP2 | X | X | 0 | X | X | 0 | 0 | 0 | 0 | X | X | X | X | 0 | 0 |
l'élément de détection D1 échantillonnant le modèle binaire de la piste de détection SP1 à la position 1, l'élément de détection D2 échantillonnant le modèle binaire de la piste de détection SP2 à la position 0, l'élément de détection D3 échantillonnant le modèle binaire de la piste de détection SP1 à la position 2, l'élément de détection D4 échantillonnant le modèle binaire de la piste de détection SP1 à la position 0, l'élément de détection D5 échantillonnant le modèle binaire de la piste de détection SP2 à la position 2 et l'élément de détection D6 échantillonnant le modèle binaire de la piste de détection SP2 à la position 4.
